(19) Europäisches Patentamt
European Patent Office
Office européen des brevets

(11) **EP 1 626 566 A1**

(12) **EUROPEAN PATENT APPLICATION**
published in accordance with Art. 158(3) EPC

(43) Date of publication:
**15.02.2006 Bulletin 2006/07**

(51) Int Cl.:
**H04N 1/40** (1968.09)      **G06T 5/00** (1995.01)
**B41J 2/52** (1990.01)

(21) Application number: **04731768.0**

(22) Date of filing: **07.05.2004**

(86) International application number:
**PCT/JP2004/006516**

(87) International publication number:
**WO 2004/100529 (18.11.2004 Gazette 2004/47)**

(84) Designated Contracting States:
**AT BE BG CH CY CZ DE DK EE ES FI FR GB GR HU IE IT LI LU MC NL PL PT RO SE SI SK TR**

(30) Priority: **08.05.2003 JP 2003129699**

(71) Applicant: **SEIKO EPSON CORPORATION Tokyo 160-0811 (JP)**

(72) Inventor: **HAYAISHI, Ikuo;**
**3-5, Owa 3-chome, Suwa-shi 3928502; (JP)**

(74) Representative: **Winter, Brandl, Fürniss, Hübner Röss, Kaiser,**
**Polte Partnerschaft Patent- und Rechtsanwaltskanzlei**
**Alois-Steinecker-Strasse 22**
**85354 Freising (DE)**

(54) **IMAGE PROCESSING FOR EXPRESSING GRADATION**

(57)      An image processing technology to correct pixel values of input pixels is provided. First, a conversion relationship indicating the relationship between input pixel values and first tone-corrected values obtained by correction of the input pixel values is established. Based on this conversion relationship, the input pixel values are then converted to first tone-corrected values having a higher number of bits than the input pixels. From the first tone-corrected values, second tone-corrected values having a smaller number of bits than the first tone-corrected values are then generated. During this process, the second tone-corrected values is generated such that a tone of the first tone-corrected values is reproduced by multiple second tone-corrected values for multiple mutually adjacent pixels.

Fig.3A

## Fig.3B

| DIb | |
|---|---|
| 127 | 127 |
| 127 | 127 |

⇒

| Ab | |
|---|---|
| 128.2 | 128.2 |
| 128.2 | 128.2 |

⇒

| DTb | |
|---|---|
| 512 | 512 |
| 512 | 512 |

⇒

DMb1 — DMb2 — DMb

| 128 | 128 |
|---|---|
| 128 | 128 |

DMb3 — DMb4

## Fig.3C

| DIc | |
|---|---|
| 128 | 128 |
| 128 | 128 |

⇒

| Ac | |
|---|---|
| 128.7 | 128.7 |
| 128.7 | 128.7 |

⇒

| DTc | |
|---|---|
| 514 | 514 |
| 514 | 514 |

⇒

DMc1 — DMc — DMc2

| 128 | 129 |
|---|---|
| 129 | 128 |

DMc3 — DMc4

## Fig.3D

| DId | |
|---|---|
| 129 | 129 |
| 129 | 129 |

⇒

| Ad | |
|---|---|
| 128.9 | 128.9 |
| 128.9 | 128.9 |

⇒

| DTd | |
|---|---|
| 515 | 515 |
| 515 | 515 |

⇒

DMd1 — DMd — DMd2

| 128 | 129 |
|---|---|
| 129 | 129 |

DMd3 — DMd4

## Fig.3E

P1 — P — P2

| 0 | 2 |
|---|---|
| 3 | 1 |

P3 — P4

## Description

TECHNICAL FIELD

The present invention relates to a digital image processing technology for carrying out tone expression.

BACKGROUND ART

Correction of input pixel values and conversion thereof into tone-corrected values (hereinafter termed 'conventional corrected values') in order to correct brightness and color balance and obtain desired images is commonly carried out. (See, for example, JP 2002-223358A)

When this process is employed, the number of bits included in the conventional corrected value is identical to the number of bits included in the input image value.

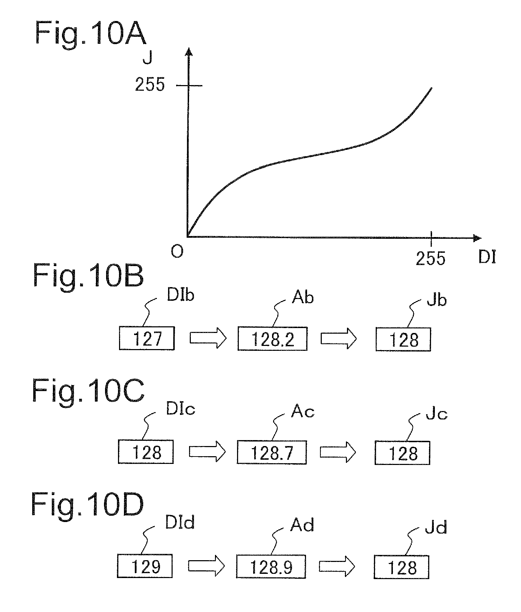

Figs. 10A through 10D show the process for determining the conventional corrected value in the technology of the prior art. Fig. 10A is a tone curve showing the relationship between an input pixel value DI and a conventional corrected value J, and shows an example in which both the input pixel value DI and the conventional corrected value J have eight bits. Fig. 10B shows an example in which the value 127 of the input pixel value DI for a given input pixel is corrected according to the tone curve to generate a resultant value Ab = 128.2 (hereinafter referred to as 'original-bit continuous value') assuming that the result of correction can take continuous values. In actuality, due to digital processing, the conventional corrected value Jb becomes a discrete value 128. Fig. 10C shows a case in which, where the input pixel value DIc is 128 and the original-bit continuous value Ac is 128.7, the conventional corrected value Jc also becomes 128. Fig. 10D shows a case in which, where the input pixel value DId is 129 and the original-bit continuous value Ad is 128.9, the conventional corrected value Jd becomes 128.

Consequently, the prior art technology described above entails the problem that even where the input pixel values DI are different, the corresponding corrected values J are identical, and the tones associated with the input pixel values are lost.

The present invention was devised in order to resolve these problems, and an object thereof is to provide an image processing technology that offers superior tone expression and does not cause deterioration in tone reproducibility even where correction is performed using a tone curve.

DISCLOSURE OF THE INVENTION

In order to resolve the above problems, an image processing method for correcting pixel values of input pixels, comprising the steps of: (i) establishing a conversion relationship that indicates relationship between the input pixel values and first tone-corrected values which are corrected from the input pixel values; (ii) converting the input pixel values according to the conversion relationship into the first tone-corrected values having a higher number of bits than the input pixel values; and (iii) generating from the first tone-corrected values second tone-corrected values having a smaller number of bits than the first tone-corrected values, wherein the step (iii) generates the second tone-corrected values such that a tone of the first tone-corrected values is expressed by a plurality of the second tone-corrected values for a plurality of mutually adjacent pixels.

According to this image processing method, because the input pixel values are converted into first tone-corrected values having a higher number of tones, and a tone of the first tone-corrected values is expressed by the second tone-corrected values for multiple pixels, an image with superior tone expression can be obtained. At the same time, because the number of bits of the second tone-corrected values is smaller than the number of bits of the first tone-corrected values, post-tone correction processes can be carried out without a significant increase in the processing burden.

The second tone-corrected values may have the same number of bits as the input pixel values.

According to this image processing method, because the number of bits of the data handled after the tone correction processing is identical to the number of bits of the input pixel value, the processing burden after the tone processing does not change. Nevertheless, because the input pixel values are converted into the first tone-corrected values having a higher number of tones, and a tone of the first tone-corrected values is expressed using the second tone-corrected values for multiple pixels, an image with superior tone expression can be achieved.

It is acceptable if a difference between the number of bits of the first tone-corrected values and the number of bits of the input pixel values is larger than a difference between the number of bits of the first tone-corrected values and the number of bits of the second tone-corrected values.

According to this image processing method, because the number of tones that can be expressed by the second tone-corrected values increases factorially, tone expression can be increased dramatically.

The step (iii) may be a step in which the number of bits of the first tone-corrected values is reduced using a dithering method.

The number of elements in the dithering matrix used in the step (iii) equals the number that is obtained by dividing the number of tones that can be expressed by the number of bits of the first tone-corrected values by the number of tones that can be expressed by the number of bits of the second tone-corrected values. According to this image processing method, an image exhibiting superior tone expression can be obtained via processing using a small-sized matrix.

The step (iii) may be a step that reduces the number of bits of the first tone-corrected values using an error diffusion method.

According to this image processing method, because errors occurring during the bit number reduction are not conspicuous, a higher-quality image may be obtained.

The above image processing method may further comprise the steps of: executing, between the steps (ii) and (iii), a first image correction process to the first tone-corrected values to correct the first tone-corrected values; and executing, after the step (iii), a second image correction process using the second tone-corrected values.

It is preferable that the first image correction process is a process executed while a relatively small amount of image data is stored in a buffer memory, and the second image correction process is a process executed while a relatively large amount of image data is stored in the buffer memory.

It is also preferable that the first image correction process include saturation correction and that the second image correction process include sharpness adjustment.

The present invention may be realized in various forms, and may be realized in the form of an image processing apparatus or computer program that implements an image processing method, a recording medium on which such computer program is recorded, or the like.

BRIEF DESCRIPTION OF THE DRAWINGS

Fig. 1 is a block diagram showing the construction of an image processing apparatus comprising an embodiment of the present invention;
Fig. 2 is a block diagram showing a tone conversion module 97 incorporated in the first embodiment;
Figs. 3A through 3E show the relationship between input pixel values DI and second tone-corrected values DM in the first embodiment;
Fig. 4 shows a different relationship between input pixel values DI and second tone-corrected values DM in the first embodiment;
Figs. 5A through 5C show the relationship between input pixel values DI and second tone-corrected values DM in a second embodiment;
Fig. 6 shows the relationship between input pixel values DI and second tone-corrected values DM in a third embodiment;
Fig. 7 is a block diagram showing the construction of a printer driver in a fourth embodiment;
Fig. 8 is a flow chart showing a processing sequence in the fourth embodiment;
Fig. 9 is a flow chart showing the detailed sequence of an enhancement process; and
Figs. 10A through 10D show the relationship between input pixel values DI and second tone-corrected values DM in the conventional art.

BEST MODE FOR CARRYING OUT THE INVENTION

Embodiments of the present invention will be described in the following sequence based on examples.

A. Construction of apparatus
B. First embodiment
C. Second embodiment
D. Third embodiment
E. Fourth embodiment
F. Variations

A. Construction of apparatus

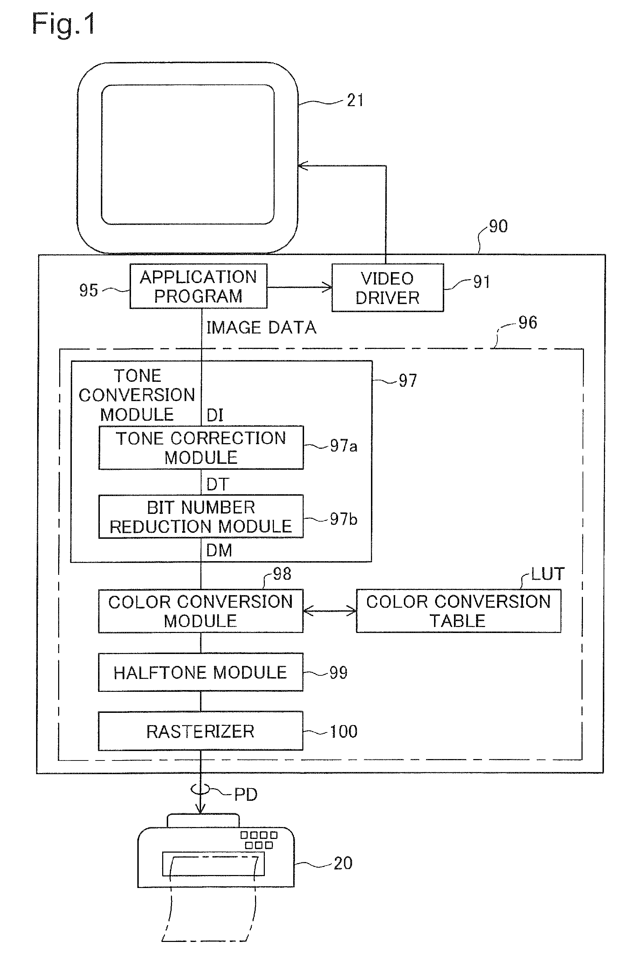

Fig. 1 is a block diagram showing the construction of an image processing apparatus comprising an embodiment of the present invention. This image processing system includes a computer 90 and a printer 20. The image processing system that includes the printer 20 and the computer 90 can be generally termed an 'image processing apparatus'.

In the computer 90, an application program 95 is executed under the control of a prescribed operating system. The operating system incorporates a video driver 91 and printer driver 96, and print data PD to be relayed to the printer 20 is output from the application program 95 via these drivers. The application program 95 that performs image editing and the like performs desired processing to the image to be processed, and displays the image on a CRT 21 via the video driver 91.

When a print command is issued by the application program 95, the printer driver 96 of the computer 90 receives the image data from the application program 95 and converts it into print data PD to be supplied to the printer 20. The printer driver 96 incorporates a tone conversion module 97, a color conversion module 98, a halftone module 99, a rasterizer 100 and a color conversion lookup table LUT.

The tone conversion module 97 comprises a tone correction module 97a and a bit number reduction module 97b. The image data received from the application program 95 comprises multiple input pixel values DI, and each input pixel value DI is converted by the tone correction module 97a into a first tone-corrected value DT having a larger number of bits than the input pixel value DI. The first tone-corrected value DT is converted by the bit number reduction module 97b into a second tone-corrected value DM having a smaller number of bits than the first tone-corrected value DT.

The second tone-corrected value DM is image information composed of the three RGB color components. The color conversion module 98 uses the color conversion lookup table LUT to convert the RGB image data on a pixel-by pixel basis into multiple-tone data for the multiple ink colors that can be used by the printer 20.

The converted multiple-tone data has 256 tones, for example. The halftone module 99 generates halftone data by carrying out so-called halftone processing. This halftone image data is arranged in the order in which the data is to be relayed to the printer 20 by the rasterizer 100 and is then output as final print data PD. The print data PD includes raster data indicating the dot formation states for each main scan pass and data indicating sub-scan feed amounts.

The printer driver 96 is equivalent to a program that implements the function to generate the print data PD by executing various types of image processing. The program to realize the functions of the printer driver 96 is supplied in the form of a program recorded on a computer-readable recording medium. This recording medium may consist of a flexible disk, CD-ROM, magnetic disk, IC card, ROM cartridge, punch card, printed matter on which a bar code or other symbols are printed, or any of other various types of computer-readable media, such as a recording device disposed inside the computer (such as RAM, ROM or other memory) or outside the computer.

B. First embodiment

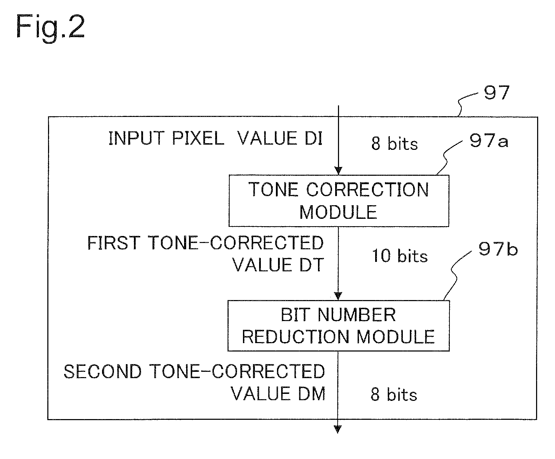

Fig. 2 shows the tone conversion module 97 in a first embodiment. In this embodiment, the tone correction module 97a performs tone curve correction to an eight-bit input pixel value DI to generate a 10-bit first tone-corrected value DT. The bit number reduction module 97b carries out the bit reduction processing described below to the 10-bit first tone-corrected value DT to generate an eight-bit second tone-corrected value DM.

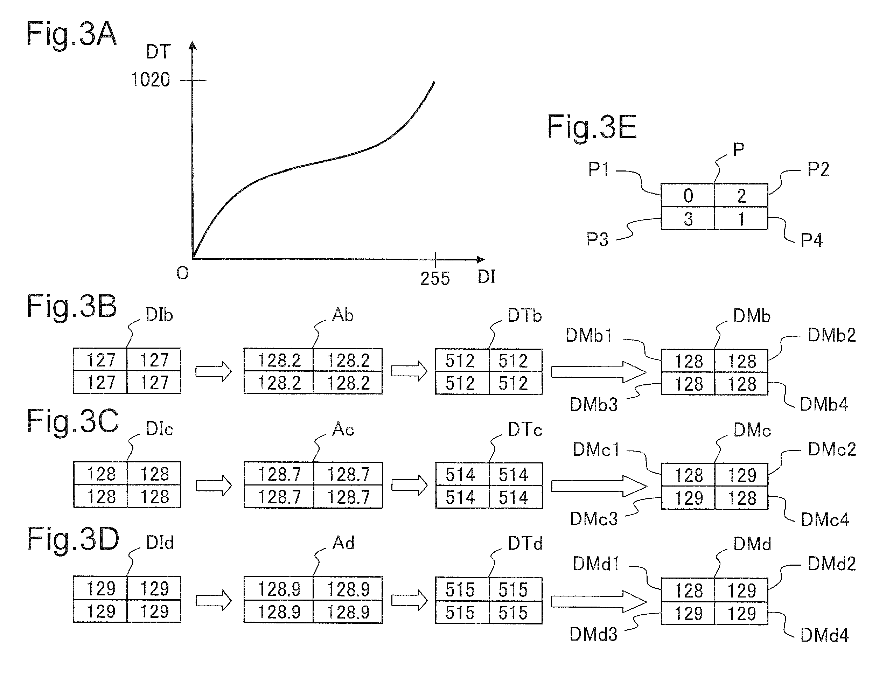

Figs. 3A through 3E show the relationship between the input pixel value DI and the second tone-corrected value DM. Fig. 3A is a tone curve showing the relationship between the eight-bit input pixel value DI and the 10-bit first tone-corrected value DT. The maximum value of 255 for the input pixel value DI is set so as to correspond to the maximum value of 1020 of the first tone-corrected value DT. The reason that the maximum value of the first tone-corrected value DT is smaller than the maximum value expressible by 10 bits (i.e., 1023) is described below.

Fig. 10B shows an example of the prior art technology in the case where the input pixel value DIb of 127 for a given input pixel is corrected using a tone curve to generate a resultant value Ab = 128.2 (hereinafter the 'original bit continuous value') assuming that the result can take continuous values. The process for determining the first tone-corrected value DT in the first embodiment is described below using an example in which the input pixel value DIb is 127 and the original bit continuous value Ab is 128.2. As shown in Fig. 3B, the first tone-corrected value DTb is a value derived by multiplying the original bit continuous value Ab by four and rounding off. The multiple '4' is obtained by dividing the number of tones that can be expressed by the number of bits of the first tone-corrected value DT (=1024) by the number of tones that can be expressed by the input pixel value DI (= 256). Therefore, the first tone-corrected value DTb corresponding to the original bit continuous value Ab of 128.2 is 512.

The procedure for determining the second tone-corrected value DM will now be described. Here, the 2 x 2 dithering matrix shown in Fig. 3E is introduced. The dithering matrix P is a matrix in which the values of 0 to 3 are allocated to the four pixels P1 through P4 arranged in a 2 x 2 fashion. The total number of elements in the dithering matrix P is the same value as that obtained by dividing the number of tones that can be expressed by the number of bits of the first tone-corrected value DT (= 1024) by the number of tones that can be expressed by the input pixel value DI (= 256). The value of the second tone-corrected value DM is determined according to the following equation (1):

$$DM = INT[\ (DT + Pi)\ /\ 4\ ]\ .\ .\ .\ (1)$$

Here, INT[X] is a function that obtains an integer value by eliminating the decimal portion of a value X, and Pi is the value of the ith element of the dithering matrix P where i is an integer from 1 to 4. The divisor '4' is a value obtained by dividing the number of tones that can be expressed by the number of bits of the first tone-corrected value DT (= 1024) by the number of tones that can be expressed by the second tone-corrected value DM (= 256). As shown in Fig. 3B, where all of the first tone-corrected values DTb corresponding to the four pixels in the dithering matrix P are 512, the second tone-corrected values DMb1, DMb2, DMb3 and DMb4 are all values of 128. The maximum value of the first tone-corrected value DT obtained via the tone curve is set to 1020 so that the maximum value of the first tone corrected value DT will make the second tone-corrected value DM, according to the equation (1), to be the maximum value of 255 that can be expressed by eight bits.

As shown in Fig. 3C, where the input pixel value DIc is 128 and the original bit continuous value Ac is 128.7, the first tone-corrected value DTc becomes 514 via the same processing described above. When the dithering matrix P and the equation (1) are applied, the second tone-corrected values DMc1 and DMc4 at two pixel positions become 128, while the second tone-corrected values DMc2 and DMc2 at the other two pixel positions become 129.

Similarly, as shown in Fig. 3D, where the input pixel value DId is 129 and the original bit continuous value Ad is 128.9, the first tone-corrected value DTd becomes 516. When the dithering matrix P and equation (1) are applied, the second tone-corrected value DMd1 at one pixel position becomes 128, while the second tone-corrected values DMd2, DMd3 and DMd4 at the other three pixel positions become 129.

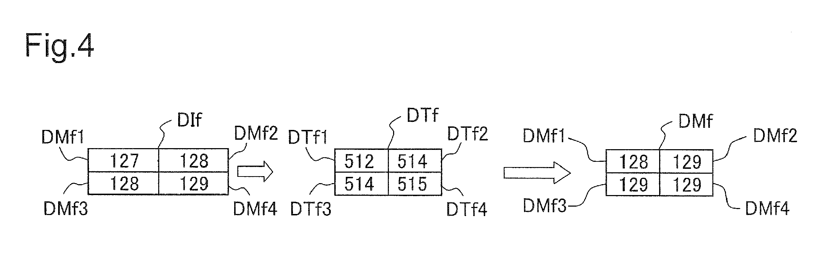

In the examples shown in Figs. 3B through 3D, the input pixel values DI for four adjacent pixels are identical. The input pixel values DI may be different from each other. Fig. 4 shows an example in which the input pixel values DIf1, DIf2, DIf3 and DIf4 of adjacent input pixels are 127, 128, 128 and 129, respectively. The first tone-corrected values DT corresponding to the input pixel values of 127, 128 and 129 are 512, 514 and 515. Therefore, the first tone-corrected values DTf1, DTIf2, DTf3 and DTf4 become 512, 514, 514 and 515, respectively. As in the case of Figs. 3B through 3E, when the dithering matrix P and equation (1) are applied, the second tone-corrected values DMf1, DMf2, DMf3 and DMf4 become 128, 129, 129 and 129, respectively.

As described above, in the first embodiment, a tone of the first tone-corrected values DT obtained by correcting the input pixel value DI based on the tone curve is expressed by a plurality of pixels having the second tone-corrected values DM without increasing the number of bits of the second tone-corrected values DM beyond the number of bits of the input pixel values DI. Not increasing the number of bits of the second tone-corrected values DM means not increasing the number of bits of data per color handled by the color conversion module 98 explained with reference to Fig. 1. Therefore, the memory and the processing speed need not be increased dramatically.

### C. Second embodiment

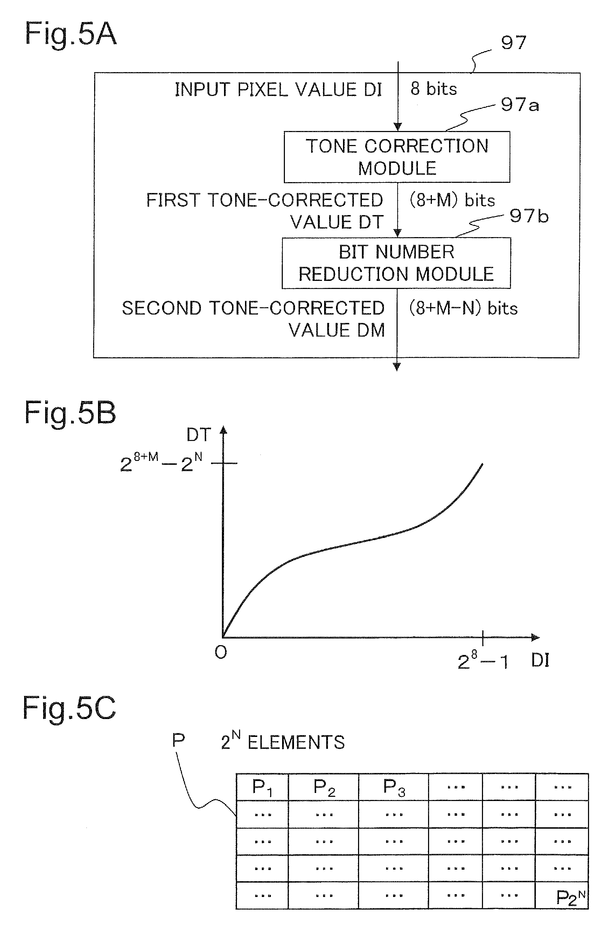

Fig. 5A shows the tone correction module 97 in a second embodiment. The input pixel value DI has eight bits, the first tone-corrected value DT has (8+M) bits, and the second tone-corrected value DM has (8+M-N) bits. Here, M is an integer larger than one, and N is any positive integer.

Fig. 5B shows a tone curve. The tone curve is determined such that first tone-corrected values DT ranging from 0 to $(2^{(8+M)} - 2^N)$ correspond to input pixel values DI ranging from 0 to $(2^8 - 1)$. The maximum value for the first tone-corrected value DT is limited to $(2^{(8+M)} - 2^N)$ because the values in the range from $(2^{(8+M)} - 2^{(N+1)})$ to $(2^{(8+M)} - 1)$ will make the second tone-corrected value DM to exceed the range of values that can be expressed by the number $(8 + M - N)$ of bits of the second tone-corrected value DM during the bit reduction process carried out by the bit number reduction module 97b. The first tone-corrected values DT corresponding to input pixel values DI are obtained in accordance with this tone curve.

Fig. 5C shows a dithering matrix P applied in the bit reduction module 97b. In this embodiment, the dithering matrix P has $2^N$ elements, and the values of the elements of the dithering matrix P range from 0 to $(2^N - 1)$. Applying the dithering matrix P, the second tone-corrected value DM is determined according to the following equation (2):

$$DM = INT[\ (DT + Pi)\ /\ 2^N]\ .\ .\ .\ (2)$$

Here, INT[X] is a function that obtains an integer value by eliminating the decimal portion of a value X, and Pi is the value of the ith element of the dithering matrix P where i is an integer from 1 to $2^N$.

In this way, even though the number of bits of the second tone-corrected values DM and handled in the processes following the process to obtain the second tone-corrected values increases by only (M-N), the number of tones that can be reproduced by the second tone-corrected values DM can be increased by a power of two. The number of tones that can be reproduced by the second tone-corrected values DT increases dramatically as the difference M between the number of bits of the first tone-corrected values DT and the number of bits of the input pixel values DI becomes larger than the difference N between the number of bits of the first tone-corrected values DT and the number of bits of the second tone-corrected values DM.

### D. Third embodiment

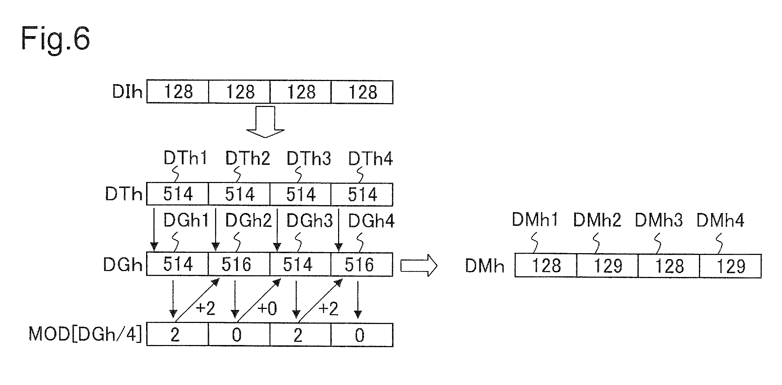

Fig. 6 shows the relationship between input pixel values DI and second tone-corrected values DM in a third embodiment. This embodiment is an example in which the error diffusion method is applied in determining the second tone-corrected value DM from the first tone-corrected value DT. The process until the first tone-corrected value DT is obtained from the input pixel value DI is identical to the corresponding processes described above in connection with the first and second embodiments. An example will now be described in which the tone curve is identical to that applied in the first embodiment and the number of bits of the second tone-corrected value DM is two bits smaller than the number of bits of the first tone-corrected value DT.

Because the tone curve here is identical to that of the first embodiment, where the input pixel values DIh of four adjacent input pixels are all 128, the first tone-corrected values DTh1 through DTh4 are 514, as shown in Fig. 6.

In the bit reduction process of the third embodiment, the first error-inclusive tone-corrected value DGi for the ith pixel is provided using the following equation (3):

$$DG_i = DT + MOD\ [DG_{i-1},\ 2^N]\ .\ .\ .\ (3)$$

Here, MOD[X, Y] is a function to obtain the remainder of division of a value X by Y, and N is the difference between the number of bits of the first tone-corrected value DT and the number of bits of the second tone-corrected value DM. The second tone-corrected value DMi for the ith pixel is obtained via the equation (4) below:

$$DMi = INT[DG_i / 2^N] \ldots (4)$$

The above equation will be explained more specifically with reference to Fig. 6. The first error-inclusive value DGh1 is 514, which is equal to the first tone-corrected value DTh1. The second error-inclusive value DGh2 is 516, which is a sum of the second first tone-corrected value DTh2 and two, which is the remainder of division of the error-inclusive value DGh1 by four. The third error-inclusive value DGh3 is 514, which is a sum of the third first tone-corrected value DTh3 of 514 and zero, which is the remainder of division of the second error-inclusive value DGh2 of 516 by four. Similarly, the fourth error-inclusive value DGh3 is 516. The second tone-corrected value DM is obtained by dividing the error-inclusive value DG sought in this fashion by four and rounding off fractions of the result of the division. In other words, as shown in Fig. 6, the second tone-corrected values DMh1, DMh2, DMh3 and DMh4 respectively become 128, 129, 128 and 129. The number four used as a divisor in this embodiment is equal to $2^2$, and is the value obtained by dividing the number of tones (=1024) expressible by the number of bits of the first tone-corrected value DT by the number of tones (=256) expressible by the number of bits of the second tone-corrected value DM.

In this embodiment, as in the first embodiment, the errors caused by bit reduction can be made inconspicuous and subtle tones can be reproduced.

E. Fourth embodiment

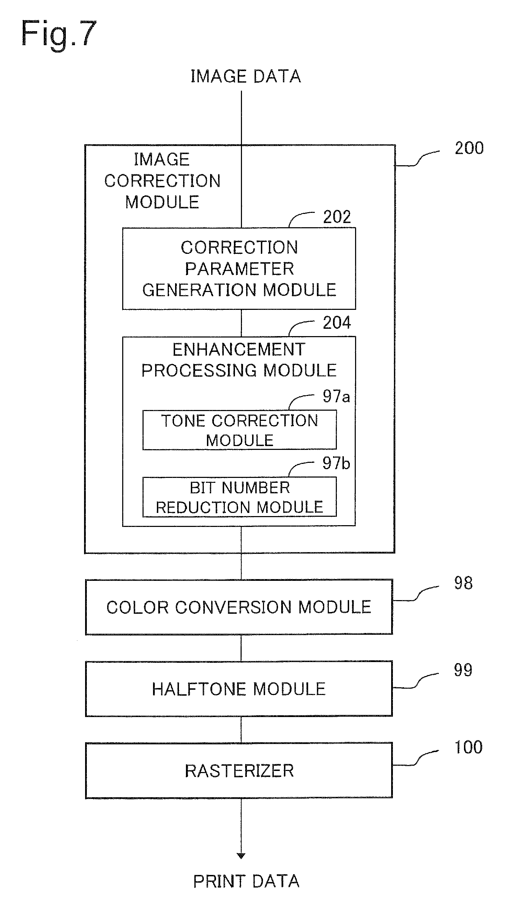

Fig. 7 is a block diagram showing the construction of a printer driver of a fourth embodiment. It differs from the printer driver 96 shown in Fig. 1 only in that the tone conversion module 97 is replaced by an image correction module 200, and is otherwise identical to the printer driver 96 shown in Fig. 1.

The image correction module 200 includes a correction parameter generation module 202 and an enhancement processing module 204. The enhancement processing module 204 has a function to perform various image correction processes (described below), as well as functions to serve as the tone correction module 97a and the bit reduction module 97b. Here, 'enhancement processing' is processing to increase image quality, and includes various image correction processes such as tone correction, color correction, saturation adjustment and the like. The correction parameter generation module 202 creates various correction parameters used during enhancement processing.

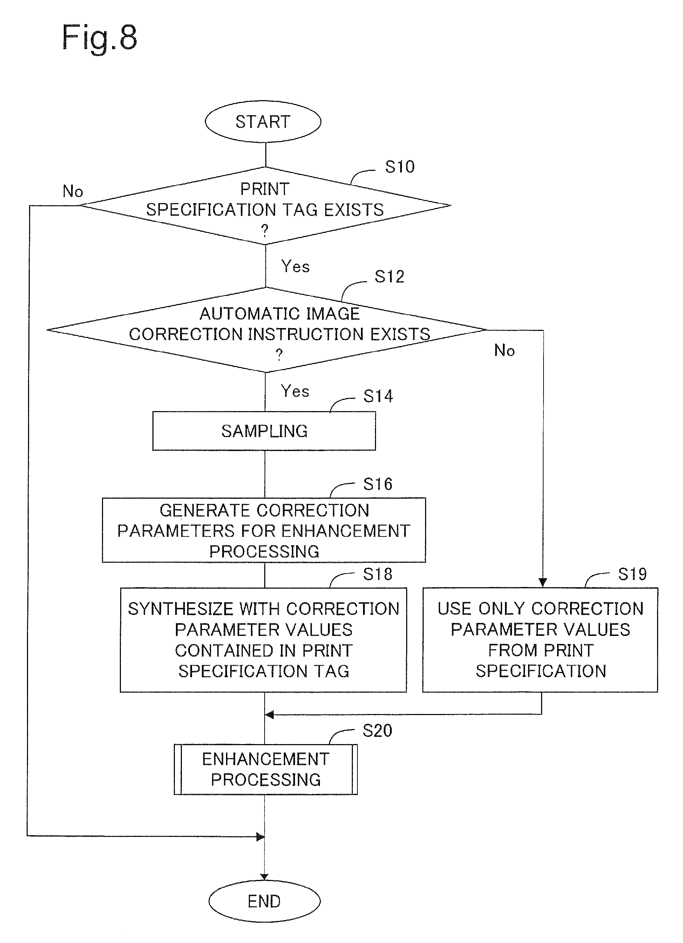

Fig. 8 is a flow chart showing the sequence of operations performed by the image correction module 200. In step S10, the correction parameter generation module 202 determines whether or not a print specification tag is registered in the image data file to be processed. Here, a 'print specification tag' has a data structure for storing various parameter values used to carry out various image correction processes (such as tone correction, color correction and saturation adjustment) when an image is printed. The print specification tag can be registered in an EXIF file, for example. An EXIF file is an image data file format established by the Japan Electronics and Information Technology Association (JEITA).

When there is no print specification tag, processing by the image correction module 200 ends and processing by the color conversion module 98 (see Fig. 7) is begun. If a print specification tag does exist, on the other hand, the image correction module 200 proceeds to step S12, wherein the correction parameter generation module 202 determines whether or not an automatic image correction instruction is present in the print specification tag. Here, 'automatic image correction' refers to a process in which correction parameter values are calculated via image sampling and analysis, and image correction is carried out using these correction parameter values. An instruction to carry out automatic image correction may also be given via user input in the user interface window of the printer driver.

When there is no automatic image correction instruction, the image correction module 200 proceeds to step S 19, and the enhancement processing in step S20 is carried out using the correction parameter values included in the print specification tag.

When an automatic image correction instruction is present, the image correction module 200 executes the processes of steps S14-S18. The correction parameter generation module 202 first samples the image in step S14 and determines various parameter values to be used during enhancement processing in accordance with the results of the sampling. Enhancement processing includes, for example, noise elimination, tone correction, memory color correction, saturation correction, HSB space color correction, sharpness adjustment and the like. In step S18, the correction parameter values included in the print specification tag and the correction parameter values created in step S 16 are synthesized. This synthesis varies depending on the type of enhancement process, and involves execution of prescribed mathematical operations such as addition or averaging. In step S20, the enhancement processing module 204 performs various types of enhancement processing using the various correction parameter values prepared as described above.

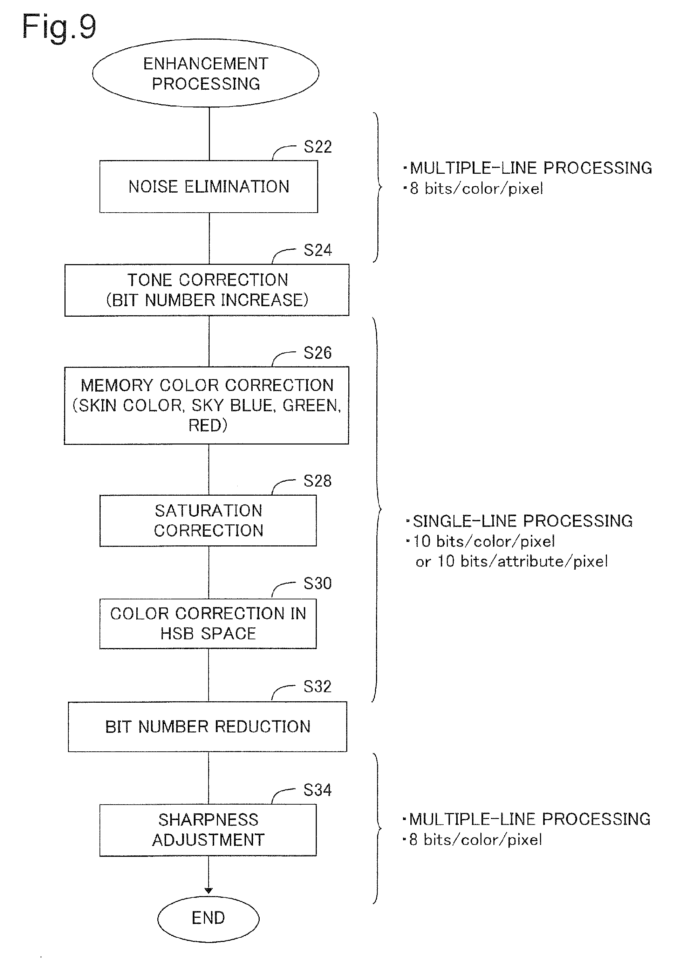

Fig. 9 is a flow chart showing the enhancement process in detail. In step S22, noise elimination is carried out. Noise elimination is a process to harmonize very small characteristic pixel values included in an image with surrounding pixel values. This process is executed while several lines' worth of image data is stored in the buffer memory (a temporary work memory). The image data to be processed is 8-bits/color/ pixel RGB data.

In step S24, tone correction is carried out. This tone correction is identical to the tone correction described in connection with the first through third embodiments. In this process, the number of bits of the RGB data is increased from eight bits to 10 bits, for example.

Because this tone correction is performed for each pixel, image data for several lines' worth of image data need not be stored in the buffer memory, such that the process is carried out with image data for only one line (or one pixel) stored in the buffer memory. In this regard, the process is identical to the processes of steps S26 through S30 described below.

In step S26, memory color processing is carried out for each of multiple prescribed specific color ranges (skin color, sky blue, green, red). This enables colors in prescribed color ranges to be corrected to the preferred color. In step S28, saturation correction is carried out. This saturation correction is a process in which saturation is increased via RGB value correction intended to increase the difference between the maximum and minimum RGB values (corresponding to saturation) for each pixel, for example. In step S30, color correction is carried out using the HSB (Hue, Saturation, Brightness) space. The HSB space is also called the HSI (Hue, Saturation, Intensity) space, and is a color space that expresses a given color in terms of the three attributes of hue, saturation and brightness. Because the three attributes (hue, saturation, brightness) can be corrected directly in the HSB space, it enables desired color correction to be performed more accurately than when the RGB space is used. However, because color space conversion must be carried out during processing, the time required for processing increases.

The processing of steps S24 through S30 is carried out while the image data for one line (or one pixel) is stored in the buffer memory. In addition, the image data to be processed is 10-bits/color/pixel data or 10-bits/attribute/pixel data. Because these processes are carried out to 10-bit data, processing can be performed more accurately than when 8-bit data is processed.

In step S32, bit number reduction processing is performed. This bit number reduction processing is identical to that performed in connection with the first through third embodiments described above. In this bit number reduction processing, the number of bits of RGB data is reduced from 10 bits to 8 bits, for example.

In step S34, sharpness adjustment is performed. Sharpness adjustment is a process in which sharpness is adjusted by correcting the pixel values for each pixel in accordance with the pixel values for surrounding pixels. Therefore sharpness adjustment is performed while image data for several lines' worth of image data is stored in the buffer memory.

As described above, the processes of steps S22 and S34 are carried out while image data for multiple lines is stored in the buffer memory, and the image data to be processed is 8-bits/color/pixel data. On the other hand, the processes of steps S24 through S30 are carried out while image data for one line is stored in the buffer memory, and the image data to be processed is 10-bits/color/pixel data or 10-bits/attribute/pixel data. In other words, in the fourth embodiment, processes in which a relatively large amount of image data is stored in the buffer memory are performed to image data having a relatively small number of bits, while processes in which a relatively small amount of image data is stored in the buffer memory are performed to image data having a relatively small number of bits. As a result, some enhancement processing can be carried out with high precision using a relatively high bit number without increasing the size of the buffer memory excessively.

One or more of the processes described above may be omitted from enhancement processing, and other processes may be included therein. However, it is preferred that enhancement processing (image correction processing) include at least tone correction, saturation correction and sharpness adjustment.

F. Variations

The present invention is not limited to the examples and embodiments described above, and may be implemented in various forms within the essential scope thereof. For example, the variations described below are included within the scope of the present invention.

F1. Variation 1

The dithering matrix P applied in the first and second embodiments may be a two-dimensional matrix in which the numbers of columns and rows are different, or may be a one-dimensional matrix.

F2. Variation 2

While a tone curve is used during tone correction in the above embodiments, the tone correction may be performed using a conversion relationship having a configuration other than that of a tone curve.

F3. Variation 3

In connection with the above embodiments, the example of an image processing method and image processing apparatus using a computer and serial printer was described, but the present invention is not limited to this implementation, and may be realized in various other forms. For example, the image processing apparatus of the present invention may comprise a digital camera, scanner, facsimile machine, copier, line printer or page printer, and the present invention may be applied as the image processing method for such image processing apparatus. Furthermore, the image processing method of the present invention may be implemented as either software or hardware.

INDUSTRIAL APPLICABILITY

The present invention is applicable to an image processing apparatus, a printer that includes image processing functions, an image processing program and the like.

**Claims**

1.　An image processing method for correcting pixel values of input pixels, comprising the steps of:

(i) establishing a conversion relationship that indicates relationship between the input pixel values and first tone-corrected values which are corrected from the input pixel values;
(ii) converting the input pixel values according to the conversion relationship into the first tone-corrected values having a higher number of bits than the input pixel values; and
(iii) generating from the first tone-corrected values second tone-corrected values having a smaller number of bits than the first tone-corrected values, wherein the step (iii) generates the second tone-corrected values such that a tone of the first tone-corrected values is expressed by a plurality of the second tone-corrected values for a plurality of mutually adjacent pixels.

2.　An image processing method according to Claim 1, wherein the second tone-corrected values have the same number of bits as the input pixel values.

3.　An image processing method according to Claim 1, wherein a difference between the number of bits of the first tone-corrected values and the number of bits of the input pixel values is larger than a difference between the number of bits of the first tone-corrected values and the number of bits of the second tone-corrected values.

4.　An image processing method according to any of Claims 1 through 3, wherein the step (iii) is a step in which the number of bits of the first tone-corrected values is reduced using a dithering method.

5.　An image processing method according to any of Claims 1 through 3, wherein the step (iii) is a step in which the number of bits of the first tone-corrected values is reduced using an error diffusion method.

6.　An image processing method according to any of Claims 1 through 5, further comprising the steps of:

executing, between the steps (ii) and (iii), a first image correction process to the first tone-corrected values to correct the first tone-corrected values; and
executing, after the step (iii), a second image correction process using the second tone-corrected values.

7.　An image processing method according to Claim 6, wherein the first image correction process is a process executed while a relatively small amount of image data is stored in a buffer memory, and the second image correction process is a process executed while a relatively large amount of image data is stored in the buffer memory.

8.　An image processing method according to Claim 7, wherein the first image correction process includes saturation correction and the second image correction process includes sharpness adjustment.

9.　An image processing apparatus for correcting pixel values of input pixels, comprising:

a memory configured to store a conversion relationship that indicates relationship between the input pixel values and first tone-corrected values which are corrected from the input pixel values;
a first processing module configured to convert the input pixel values according to the conversion relationship into the first tone-corrected values having a higher number of bits than the input pixel values; and
a second processing module configured to generating from the first tone-corrected values second tone-corrected values having a smaller number of bits than the first tone-corrected values, wherein the second processing module generates the second tone-corrected values such that a tone of the first tone-corrected values is expressed by a plurality of the second tone-corrected values for a plurality of mutually adjacent pixels.

10.　An image processing apparatus according to Claim 9, wherein the second tone-corrected values have the same number of bits as the input pixel values.

11.　An image processing apparatus according to Claim 9, wherein a difference between the number of bits of the first tone-corrected values and the number of bits of the input pixel values is larger than a difference between the number of bits of the first tone-corrected values and the number of bits of the second tone-corrected values.

12.　An image processing apparatus according to any of Claims 9 through 11, wherein the second processing module reduces the number of bits of the first tone-corrected values using a dithering method.

**13.** An image processing apparatus according to any of Claims 9 through 11, wherein the second processing module reduces the number of bits of the first tone-corrected values using an error diffusion method.

**14.** An image processing apparatus according to any of Claims 9 through 11, further comprising:

a first image correction processing module configured to execute, between the processes by the first and second processing modules, a first image correction process to the first tone-corrected values to correct the first tone-corrected values; and
a second image correction processing module configured to execute, after the process by the second processing module, a second image correction process using the second tone-corrected values.

**15.** An image processing apparatus according to Claim 14, wherein the first image correction process is a process executed while a relatively small amount of image data is stored in a buffer memory, and the second image correction process is a process executed while a relatively large amount of image data is stored in the buffer memory.

**16.** An image processing apparatus according to Claim 15, wherein the first image correction process includes saturation correction and the second image correction process includes sharpness adjustment.

**17.** A computer program for correcting pixel values of input pixels for causing a computer to implement:

a first processing function to convert the input pixel values, according to conversion relationship that indicates relationship between the input pixel values and first tone-corrected values which are corrected from the input pixel values, into the first tone-corrected values having a higher number of bits than the input pixel values; and
a second processing function to generating from the first tone-corrected values second tone-corrected values having a smaller number of bits than the first tone-corrected values, wherein the second processing function generates the second tone-corrected values such that a tone of the first tone-corrected values is expressed by a plurality of the second tone-corrected values for a plurality of mutually adjacent pixels.

**18.** A computer program according to Claim 17, wherein the second tone-corrected values have the same number of bits as the input pixel values.

**19.** A computer program according to Claim 17, wherein a difference between the number of bits of the first tone-corrected values and the number of bits of the input pixel values is larger than a difference between the number of bits of the first tone-corrected values and the number of bits of the second tone-corrected values..

**20.** A computer program according to any of Claims 17 through 19, wherein the second processing function reduces the number of bits of the first tone-corrected values using a dithering method.

**21.** A computer program according to any of Claims 17 through 19, wherein the second processing function reduces the number of bits of the first tone-corrected values using an error diffusion method.

**22.** A computer program according to any of Claims 17 through 21, further comprising:

a first image correction processing function to execute, between the processes by the first and second processing functions, a first image correction process to the first tone-corrected values to correct the first tone-corrected values; and
a second image correction processing function to execute, after the process by the second processing function, a second image correction process using the second tone-corrected values.

**23.** A computer program according to Claim 22, wherein the first image correction process comprises a process executed while a relatively small amount of image data is stored in a buffer memory, and the second image correction process comprises a process executed while a relatively large amount of image data is stored in the buffer memory.

**24.** A computer program according to Claim 23, wherein the first image correction process includes saturation correction and the second image correction process includes sharpness adjustment.

# Fig.1

APPLICATION PROGRAM — 95

VIDEO DRIVER — 91

90

IMAGE DATA

96

TONE CONVERSION MODULE — 97

DI

TONE CORRECTION MODULE — 97a

DT

BIT NUMBER REDUCTION MODULE — 97b

DM

COLOR CONVERSION MODULE — 98

COLOR CONVERSION TABLE — LUT

HALFTONE MODULE — 99

RASTERIZER — 100

PD

20

21

# Fig.2

```
                                                            ⌐97
┌──────────────────────────────────────────────────────────┐
│   INPUT PIXEL  VALUE DI          8 bits      ⌐97a          │
│                              │                             │
│                              ▼                             │
│                   ┌──────────────────────┐                │
│                   │   TONE CORRECTION     │                │
│                   │      MODULE           │                │
│                   └──────────────────────┘                │
│   FIRST TONE-CORRECTED          10 bits      ⌐97b         │
│          VALUE DT            │                             │
│                              ▼                             │
│                   ┌──────────────────────┐                │
│                   │     BIT NUMBER        │                │
│                   │  REDUCTION MODULE     │                │
│                   └──────────────────────┘                │
│   SECOND TONE-CORRECTED                                   │
│          VALUE DM            │  8 bits                     │
│                              ▼                             │
└──────────────────────────────────────────────────────────┘
```

EP 1 626 566 A1

## Fig.3A

DT

1020 ┤

O    255    DI

## Fig.3E

P1 — P — P2

| 0 | 2 |
|---|---|
| 3 | 1 |

P1 (0), P2 (2), P3 (3), P4 (1)

## Fig.3B

DIb
| 127 | 127 |
| 127 | 127 |

⇒

Ab
| 128.2 | 128.2 |
| 128.2 | 128.2 |

⇒

DTb
| 512 | 512 |
| 512 | 512 |

⇒

DMb
DMb1 | 128 | 128 | DMb2
DMb3 | 128 | 128 | DMb4

## Fig.3C

DIc
| 128 | 128 |
| 128 | 128 |

⇒

Ac
| 128.7 | 128.7 |
| 128.7 | 128.7 |

⇒

DTc
| 514 | 514 |
| 514 | 514 |

⇒

DMc
DMc1 | 128 | 129 | DMc2
DMc3 | 129 | 128 | DMc4

## Fig.3D

DId
| 129 | 129 |
| 129 | 129 |

⇒

Ad
| 128.9 | 128.9 |
| 128.9 | 128.9 |

⇒

DTd
| 515 | 515 |
| 515 | 515 |

⇒

DMd
DMd1 | 128 | 129 | DMd2
DMd3 | 129 | 129 | DMd4

# Fig.4

| DMf1 | DIf | | DMf2 |
|---|---|---|---|
| | 127 | 128 | |
| | 128 | 129 | |
| DMf3 | | | DMf4 |

⇒

| DTf1 | DTf | | DTf2 |
|---|---|---|---|
| | 512 | 514 | |
| | 514 | 515 | |
| DTf3 | | | DTf4 |

⇒

| DMf1 | DMf | | DMf2 |
|---|---|---|---|
| | 128 | 129 | |
| | 129 | 129 | |
| DMf3 | | | DMf4 |

## Fig.5A

INPUT PIXEL VALUE DI | 8 bits 97

TONE CORRECTION MODULE 97a

FIRST TONE-CORRECTED VALUE DT | (8+M) bits 97b

BIT NUMBER REDUCTION MODULE

SECOND TONE-CORRECTED VALUE DM | (8+M−N) bits

## Fig.5B

$DT$

$2^{8+M}-2^{N}$

$O$

$2^{8}-1$  $DI$

## Fig.5C

P    $2^{N}$ ELEMENTS

| $P_1$ | $P_2$ | $P_3$ | ... | ... | ... |
|---|---|---|---|---|---|
| ... | ... | ... | ... | ... | ... |
| ... | ... | ... | ... | ... | ... |
| ... | ... | ... | ... | ... | ... |
| ... | ... | ... | ... | ... | $P_{2^N}$ |

EP 1 626 566 A1

Fig.6

# Fig.7

IMAGE DATA

```
┌─────────────────────────────────────┐   ╱ 200
│ IMAGE                                │
│ CORRECTION                           │
│ MODULE                               │
│                      ╱ 202           │
│   ┌─────────────────────────────┐    │
│   │ CORRECTION                  │    │
│   │ PARAMETER                   │    │
│   │ GENERATION MODULE           │    │
│   └─────────────────────────────┘    │
│                      ╱ 204           │
│   ┌─────────────────────────────┐    │
│   │ ENHANCEMENT                 │    │
│   │ PROCESSING MODULE           │    │
│   │                 ╱ 97a       │    │
│   │  ┌───────────────────────┐  │    │
│   │  │ TONE CORRECTION       │  │    │
│   │  │ MODULE                │  │    │
│   │  └───────────────────────┘  │    │
│   │                 ╱ 97b       │    │
│   │  ┌───────────────────────┐  │    │
│   │  │ BIT NUMBER            │  │    │
│   │  │ REDUCTION MODULE      │  │    │
│   │  └───────────────────────┘  │    │
│   └─────────────────────────────┘    │
└─────────────────────────────────────┘
```

COLOR CONVERSION MODULE   ╱ 98

HALFTONE MODULE   ╱ 99

RASTERIZER   ╱ 100

PRINT DATA

# Fig.8

START

S10

**No** ◁— PRINT SPECIFICATION TAG EXISTS ?

Yes

S12

AUTOMATIC IMAGE CORRECTION INSTRUCTION EXISTS ? —▷ **No**

Yes

S14

SAMPLING

S16

GENERATE CORRECTION PARAMETERS FOR ENHANCEMENT PROCESSING

S18

SYNTHESIZE WITH CORRECTION PARAMETER VALUES CONTAINED IN PRINT SPECIFICATION TAG

S19

USE ONLY CORRECTION PARAMETER VALUES FROM PRINT SPECIFICATION

S20

ENHANCEMENT PROCESSING

END

# Fig.9

```
        ╭─────────────────╮
        │   ENHANCEMENT   │
        │   PROCESSING    │
        ╰─────────────────╯
                 │
                 │                    S22
        ┌─────────────────────┐
        │  NOISE ELIMINATION  │          • MULTIPLE-LINE PROCESSING
        └─────────────────────┘          • 8 bits/color/pixel
                 │                    S24
        ┌─────────────────────┐
        │   TONE CORRECTION   │
        │ (BIT NUMBER INCREASE)│
        └─────────────────────┘
                 │                    S26
        ┌─────────────────────────┐
        │ MEMORY COLOR CORRECTION │
        │ (SKIN COLOR, SKY BLUE, GREEN, │
        │         RED)            │
        └─────────────────────────┘
                 │                    S28
        ┌─────────────────────┐
        │     SATURATION      │         • SINGLE-LINE PROCESSING
        │     CORRECTION      │         • 10 bits/color/pixel
        └─────────────────────┘           or 10 bits/attribute/pixel
                 │                    S30
        ┌─────────────────────┐
        │ COLOR CORRECTION IN │
        │      HSB SPACE      │
        └─────────────────────┘
                 │                    S32
        ┌─────────────────────┐
        │ BIT NUMBER REDUCTION│
        └─────────────────────┘
                 │                    S34
        ┌─────────────────────┐
        │     SHARPNESS       │         • MULTIPLE-LINE PROCESSING
        │    ADJUSTMENT       │         • 8 bits/color/pixel
        └─────────────────────┘
                 │
                 ▼
        ╭─────────────────╮
        │      END        │
        ╰─────────────────╯
```

19

## Fig.10A

## Fig.10B

| DIb | | Ab | | Jb |
|-----|---|-----|---|-----|
| 127 | ⇨ | 128.2 | ⇨ | 128 |

## Fig.10C

| DIc | | Ac | | Jc |
|-----|---|-----|---|-----|
| 128 | ⇨ | 128.7 | ⇨ | 128 |

## Fig.10D

| DId | | Ad | | Jd |
|-----|---|-----|---|-----|
| 129 | ⇨ | 128.9 | ⇨ | 128 |

## INTERNATIONAL SEARCH REPORT

| International application No. |
| --- |
| PCT/JP2004/006516 |

**A. CLASSIFICATION OF SUBJECT MATTER**
Int.Cl⁷ H04N1/40, G06T5/00, B41J2/52

According to International Patent Classification (IPC) or to both national classification and IPC

**B. FIELDS SEARCHED**

Minimum documentation searched (classification system followed by classification symbols)
Int.Cl⁷ H04N1/40-1/409, H04N1/46, H04N1/60

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 7-212606 A (Victor Company Of Japan, Ltd.), 11 August, 1995 (11.08.95), Full text & US 5585833 A1 | 1–24 |
| X | JP 2001-292331 A (Canon Inc.), 19 October, 2001 (19.10.01), Full text (Family: none) | 1–24 |
| X | JP 2001-144958 A (Canon Inc.), 25 May, 2001 (25.05.01), Full text (Family: none) | 1,2,4,9,10, 12,17,18,20 |

☒ Further documents are listed in the continuation of Box C.   ☐ See patent family annex.

| | |
| --- | --- |
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 03 August, 2004 (03.08.04) | 17 August, 2004 (17.08.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/006516 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2001-309175 A  (Sharp Corp.),<br>02 November, 2001 (02.11.01),<br>Full text<br>(Family: none) | 1,5,9,13,17,<br>21 |
| X | JP 2000-295478 A  (Konica Corp.),<br>20 October, 2000 (20.10.00),<br>Full text<br>(Family: none) | 1,5,9,13,17,<br>21 |
| X | JP 5-199413 A  (Ricoh Co., Ltd.),<br>06 August, 1993 (06.08.93),<br>Full text<br>& US 5550647 A1          & US 5724158 A1<br>& JP 14-330291 A        & JP 14-330292 A | 1,5,9,13,17,<br>21 |
| X | JP 11-8769 A  (Konica Corp.),<br>12 January, 1999 (12.01.99),<br>Full text<br>& US 6147771 A1 | 1,4,5,9,12,<br>13,17,20,21 |
| A | JP 9-121285 A  (Seiko Epson Corp.),<br>06 May, 1997 (06.05.97),<br>Full text<br>(Family: none) | 1-24 |

Form PCT/ISA/210 (continuation of second sheet) (January 2004)